# EUROPÄISCHE PATENTSCHRIFT

(11) **EP 3 394 638 B1**
(45) Veröffentlichungstag und Bekanntmachung des Hinweises auf die Patenterteilung: **14.02.2024**
(21) Anmeldenummer: 16795269.6
(22) Anmeldetag: 07.11.2016
(51) Int. Cl.: G01S 17/42, G01S 7/497, G01S 17/931, G01S 13/931

(54) **LIDAR-ABTASTEINRICHTUNG AN EINEM KRAFTFAHRZEUG**
LIDAR SCANNING DEVICE FOR A MOTOR VEHICLE
DISPOSITIF LIDAR DE BALAYAGE POUR UN VÉHICULE

(30) Priorität: 22.12.2015 DE 102015226502
(43) Veröffentlichungstag der Anmeldung: 31.10.2018
(73) Patentinhaber: Robert Bosch GmbH, 70442 Stuttgart (DE)
(72) Erfinder: STOPPEL, Klaus, 74395 Mundelsheim (DE); SCHWARZ, Hans-Jochen, 70567 Stuttgart (DE); SPARBERT, Jan, 71277 Rutesheim (DE); OSTRINSKY, Joern, 71254 Ditzingen (DE); KAMIL, Mustafa, 71229 Leonberg (DE); ADAMS, Rene, 72622 Nuertingen (DE)
(86) Internationale Anmeldenummer: PCT/EP2016/076834
(87) Internationale Veröffentlichungsnummer: WO 2017/108247

(56) Entgegenhaltungen:
- EP-A1- 2 148 220
- WO-A1-2016/198522
- DE-B3- 10 349 755
- US-B1- 6 522 287

## Beschreibung

Die Erfindung betrifft eine Lidar-Abtasteinrichtung an einem Kraftfahrzeug.

Insbesondere betrifft die Erfindung die Steuerung der Lidar-Abtasteinrichtung.

### Stand der Technik

An einem Kraftfahrzeug ist eine Lidar-Abtasteinrichtung angebracht. Die Abtasteinrichtung sendet Licht in eine Umgebung aus und empfängt Licht, das an einem Objekt reflektiert wurde. Auf der Basis einer Laufzeit des Lichts kann dann ein Abstand zum Objekt bestimmt werden. In unterschiedlichen Ausführungsformen kann der Lichtstrahl der Abtasteinrichtung in einer oder zwei Richtungen zyklisch bewegt werden, um ein vorbestimmtes Abtastfeld abzutasten. Beispielsweise kann eine Kollisionswarnung die Abtastergebnisse der Abtasteinrichtung auswerten, um zu bestimmen, ob sich das Kraftfahrzeug einem Objekt nähert, sodass eine Kollisionsgefahr besteht. Lidar-Abtasteinrichtungen sind gegenwärtig noch wenig weit verbreitet und im Allgemeinen einer bestimmten Funktion an Bord des Kraftfahrzeugs zugewiesen. Infolgedessen ist die Ausrichtung einer Lidar-Abtasteinrichtung am Kraftfahrzeug üblicherweise starr.

Aus der US 6 522 287 B1 ist ein Pre-Crash-Sensor bekannt, dessen Antenne elektronisch oder mechanisch mit der Fahrgeschwindigkeit eines Host-Fahrzeugs korreliert ist. Wenn die Vorwärtsfahrgeschwindigekit ansteigt, bleibt die Antenne seitlich ausgerichtet, jedoch in zunehmender Vorwärtsrichtung.

Aus der EP 2 148 220 A1 ist ein Fahrerassistenzsystem bekannt, umfassend mindestens eine hintere Sensoreinrichtung, welche dazu ausgebildet ist,. das Vorhandensein eines Hindernisses hinter und/oder neben dem Fahrzeug innerhalb eines Sichtfeldes zu erfassen, und eine Verarbeitungseinheit, welche dazu ausgebildet ist, eine freie Bewegungsfläche in einem vorbestimmten Bereich in Übereinstimmung mit der Position von zumindest einem erfassten Hinderniss zu ermitteln. Die Verarbeitungseinheit ist daran angepasst, eine aus einer Vielzahl von vorbestimmten Betriebsarten, welche mit einer Bewertung der Bewegungsfläche auf der Basis von Signalen, welche für die Fahrkonditionen des Fahrzeugs bezeichnend sind und auf der Basis eines Manövriersignals in Zusammenhang stehen, zu übernehmen, eine bewertete Bewegungsfläche in Übereinstimmung mit einer Sammlung von Hindernisspositionsdaten zu berechnen, und die bewertete Bewegungsfläche mit einer vorgegebenen Sollmindestbewegungsfläche zu vergleichen.

Aus der DE 103 49 755 B3 ist ein Sensor an einem Kraftfahrzeug bekannt, welcher einen im Wesentlichen quer zur Fahrzeuglängsachse ausgerichteten Erfassungsbereich aufweist. Um unterschiedliche seitliche Bereiche des Kraftfahrzeugs erfassen zu können, ist der Sensor um eine Querachse des Kraftfahrzeugs drehbar.

Der Erfindung liegt die Aufgabe zugrunde, eine Technik zur flexibleren Nutzung einer Lidar-Abtasteinrichtung an einem Kraftfahrzeug anzugeben. Die Erfindung löst diese Aufgabe mittels der Gegenstände der unabhängigen Ansprüche. Unteransprüche geben bevorzugte Ausführungsformen wieder.

### Offenbarung der Erfindung

Eine Lidar-Abtasteinrichtung zum Einsatz in einem Kraftfahrzeug wird im Anspruch 1 definiert. Ein entsprechendes Verfahren ist im Anspruch 6 definiert.

Durch die Veränderbarkeit der Ausrichtung des Abtastfelds kann die Abtasteinrichtung flexibler genutzt werden. Beispielsweise können unterschiedliche Fahrassistenten, die in unterschiedlichen Fahrsituationen verwendet werden, jeweils auf die Lidar-Abtasteinrichtung zugreifen und dabei das Abtastfeld in Abhängigkeit ihrer jeweiligen Aufgabe verbessert ausrichten. Beispielsweise kann ein Fahrassistent, der eine Kollisionswarnung vor einem vorausfahrenden Kraftfahrzeug bestimmen soll, eine andere Ausrichtung des Abtastfelds erfordern als ein Parkassistent, der einen Nahbereich des Kraftfahrzeugs bezüglich Hindernissen abtasten soll.

In einer ersten Variante ist die Schwenkeinrichtung dazu eingerichtet, den Lidar-Sensor um eine Achse zu schwenken. Der gesamte Lidar-Sensor, der selbstbewegliche Teile aufweisen kann, wird dabei schwenkbar angeordnet. Die Schwenkeinrichtung kann dabei einfach und robust aufgebaut sein.

In einer anderen Variante ist die Schwenkeinrichtung dazu eingerichtet, ein reflektorisches oder refraktorisches Element im Strahlengang des Lidar-Sensors um eine Achse zu schwenken. Das reflektorische Element kann beispielsweise einen Spiegel oder das refraktorische Element ein Prisma umfassen. Dadurch kann eine bewegte Masse, die durch die Schwenkeinrichtung zu bewegen ist, verringert sein. Eine elektrische Kontaktierung des Lidar-Sensors kann vereinfacht sein, da elektrische Anschlüsse die Schwenkachse nicht überbrücken müssen.

In einer bevorzugten Ausführungsform wird die Ausrichtung des Abtastfelds in Abhängigkeit einer Fahrgeschwindigkeit des Kraftfahrzeugs verändert. Insbesondere kann das Abtastfeld bei einer niedrigen Fahrgeschwindigkeit in Richtung Boden und bei einer hohen Fahrgeschwindigkeit in Richtung Horizont verändert werden. Eine maximale Entfernung eines Objekts, das mittels der Abtasteinrichtung abgetastet werden kann, kann so bei einer hohen Geschwindigkeit des Kraftfahrzeugs größer als bei einer niedrigen Geschwindigkeit sein.

Das Abtastfeld wird um eine Querachse des Kraftfahrzeugs geschwenkt. In einer besonders bevorzugten Ausführungsform kann die Ausrichtung des Abtastfelds auch um eine Hochachse verändert werden. Dadurch kann eine maximale Flexibilität bezüglich der Verwendbarkeit der Lidar-Abtasteinrichtung für unterschiedliche Messaufgaben oder für die Verbesserung eines Messergebnisses einer einzigen Messaufgabe erzielt werden.

Die Lidar-Abtasteinrichtung kann an unterschiedlichen Stellen des Kraftfahrzeugs angebracht werden. Beispielsweise kann eine Anbringung im Bereich eines Fahrzeugdachs, einer Seitenleiste, eines Kühlergrills oder eines Stoßfängers erfolgen. Besonders bevorzugt ist jedoch eine Anbringung der Abtasteinrichtung an einem Seitenspiegelgehäuse des Kraftfahrzeugs. Insbesondere in Kombination mit einer Verschwenkbarkeit des Abtastfelds in horizontaler und vertikaler Richtung (um die Hochachse und um die Querachse) kann dadurch verbessert ein für das Kraftfahrzeug relevanter Bereich dynamisch ausgewählt und abgetastet werden. Außerdem können Lidar-Abtasteinrichtungen sowohl in einem linken als auch in einem rechten Seitenspiegelgehäuse des Kraftfahrzeugs angebracht werden. Die jeweils abgetasteten Bereiche können sich in vorteilhafter Weise überlappen oder ergänzen.

Ein Verfahren umfasst Schritte des Bestimmens einer Fahrsituation eines Kraftfahrzeugs; des Veränderns einer Ausrichtung eines Abtastfelds eines Lidar-Sensors einer Lidar-Abtasteinrichtung, die am Kraftfahrzeug angebracht ist, auf der Basis der bestimmten Fahrsituation, des Abtastens eines Umfelds des Kraftfahrzeugs mittels der Lidar-Abtasteinrichtung und des Bestimmens eines Abstands zu einem Objekt innerhalb des Abtastfelds.

Das Verfahren kann insbesondere zur Steuerung der oben beschriebenen Lidar-Abtasteinrichtung eingesetzt werden.

In einer Ausführungsform wird der bestimmte Abstand zum Objekt ausgegeben.

In einer anderen Ausführungsform wird das Kraftfahrzeug in Abhängigkeit des bestimmten Abstands gesteuert. Beispielsweise kann die Abtasteinrichtung dazu eingesetzt werden, eine Bodenunebenheit vor dem Kraftfahrzeug zu bestimmen und ein Fahrwerk des Kraftfahrzeugs kann auf das Bestimmungsergebnis abgestimmt werden. Liegen etwa Bodenwellen oder Schlaglöcher vor, so kann eine Dämpfung des Fahrwerks gezielt in Richtung hart oder weich verstellt werden.

### Kurze Beschreibung der Figuren

Die Erfindung wird nun mit Bezug auf die beigefügten Figuren genauer beschrieben, in denen:
- Fig. 1: ein Kraftfahrzeug mit einer Lidar-Abtasteinrichtung
- Fig. 2: die Lidar-Abtasteinrichtung von Figur 1 an einem Kraftfahrzeug;
- Fig. 3: unterschiedlich horizontal geschwenkte Lidar-Sensoren an einem Kraftfahrzeug;
- Fig. 4: unterschiedlich vertikal geschwenkte Lidar- Sensoren an einem Kraftfahrzeug; und
- Fig. 5: ein Ablaufdiagramm eines Verfahrens
darstellt.

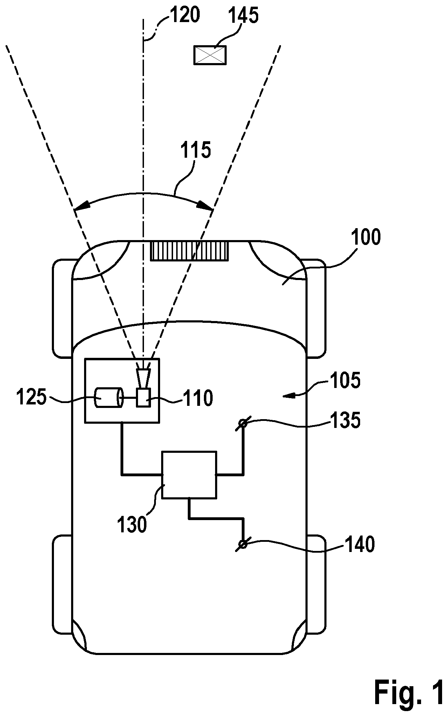

Fig. 1 zeigt ein Kraftfahrzeug 100 mit einer Lidar-Abtasteinrichtung 105. Die Abtasteinrichtung 105 umfasst einen Lidar-Sensor 110, der ein vorbestimmtes Abtastfeld 115 mit einer vorbestimmten Ausrichtung 120 aufweist, und eine Verstelleinrichtung 125. Bevorzugterweise ist zusätzlich eine Steuereinrichtung 130 vorgesehen, um die Verstelleinrichtung 125 und/oder den Lidar-Sensor 110 zu steuern. Bevorzugterweise umfasst die Steuereinrichtung 130 eine erste Schnittstelle 135 zum Bezug von Informationen, die auf eine Fahrsituation des Kraftfahrzeugs 100 hinweisen. Ferner ist bevorzugterweise eine zweite Schnittstelle 140 vorgesehen, um ein Abtastergebnis des Lidar-Sensors 110 in roher oder verarbeiteter Form bereitzustellen. Die zweite Schnittstelle 140 kann in unterschiedlichen Ausführungsformen mit einer Anzeigeeinrichtung, einer Warneinrichtung oder einer weiteren Verarbeitungseinrichtung verbunden sein, die eine Fahrerassistenzfunktion für das Kraftfahrzeug 100 ausführt.

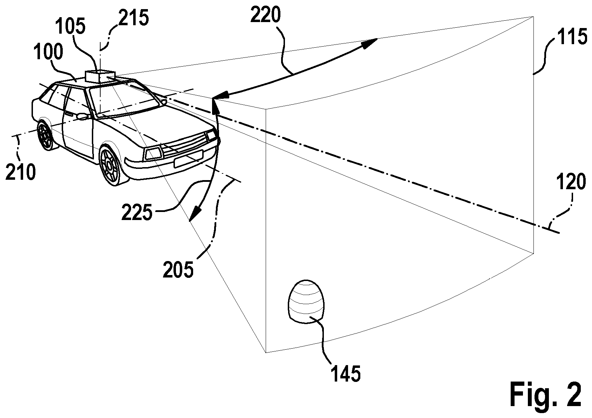

Der Lidar-Sensor 110 sendet Licht aus und empfängt ausgesandtes Licht, das an einem Objekt 145 im Abtastfeld 115 reflektiert wurde. Wie unten mit Bezug auf Fig. 2 noch genauer erklärt wird, kann das Abtastfeld 115 in einer oder zwei Dimensionen durch einen Winkel begrenzt sein. Die Mitte des Abtastfelds 115 ist durch die Ausrichtung 120 gebildet. Dabei ist die Ausrichtung 120 als Halbgerade dargestellt, die beide Winkel, insbesondere einen horizontalen und einen vertikalen Winkel, jeweils halbiert. Üblicherweise umfasst der Lidar-Sensor 110 ein motorisches Element, um die Ausleuchtung des Abtastfelds 115 periodisch zu steuern. Dabei bleibt jedoch die Ausrichtung 120 stets erhalten.

Es wird vorgeschlagen, den Lidar-Sensor 110 derart mit der Verstelleinrichtung 125 aufzubauen, dass die Ausrichtung 120 des Abtastfelds 115 verändert werden kann. Insbesondere soll die Ausrichtung 120 in Abhängigkeit einer Fahrsituation des Kraftfahrzeugs 100 verändert werden. Dabei kann die Fahrsituation auf der Basis eines Abtastergebnisses des Lidar-Sensors 110 und/oder auf der Basis anderer Abtastungen bzw. Verarbeitungen bestimmt werden.

Fig. 2 zeigt die Lidar-Abtasteinrichtung 105 von Fig. 1 am Kraftfahrzeug 100 aus einer anderen Perspektive. Rein exemplarisch ist die Abtasteinrichtung 105 auf dem Dach des Kraftfahrzeugs 100 angebracht. Das Kraftfahrzeug 100 weist eine Längsachse 205, eine Querachse 210 und eine Hochachse 215 auf. Der Abtastbereich 115 der Abtasteinrichtung 105 ist bevorzugterweise durch zwei Winkel charakterisiert. Ein erster Winkel 220 um die Hochachse 215 wird auch Horizontalwinkel genannt und ein zweiter Winkel 225 um die Querachse 210 Vertikalwinkel genannt. Die Ausrichtung 120 halbiert sowohl den ersten Winkel 220 als auch den zweiten Winkel 225. Das Objekt 145 kann nur mittels der Lidar-Abtasteinrichtung 105 erfasst werden, wenn es innerhalb des Abtastfelds 115 liegt. Eine Entfernungsbeschränkung wird hierbei nicht betrachtet.

Zu unterschiedlichen Zwecken ist es sinnvoll, unterschiedliche Abtastfelder 115 relativ zum Koordinatensystem 205, 210, 215 des Kraftfahrzeugs 100 abzutasten. Dazu ist der Lidar-Sensor 110 der Lidar-Abtasteinrichtung 105 dazu eingerichtet, mittels der Verstelleinrichtung 125 verstellt zu werden, und zwar bevorzugterweise um die Querachse 210, um die Hochachse 215 oder um beide Achsen 210, 215.

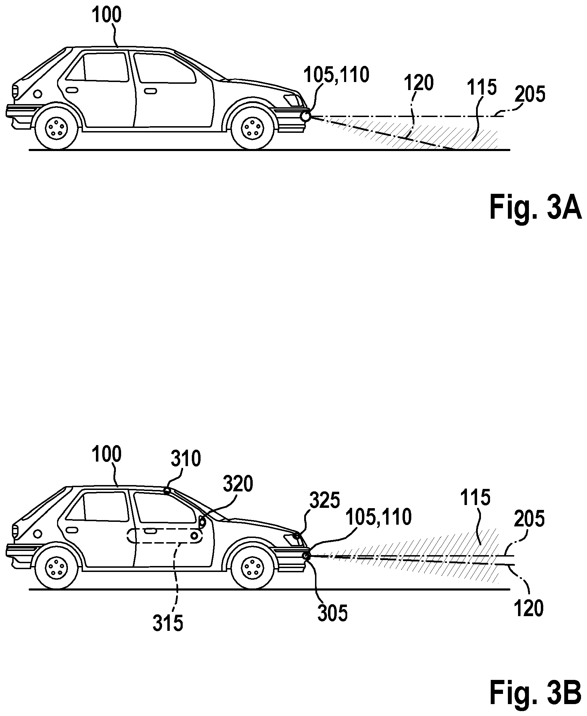

Fig. 3 zeigt unterschiedlich vertikal geschwenkte Lidar-Sensoren 110 am Kraftfahrzeug 100. In Fig. 3A ist ein Winkel zwischen der Längsachse 205 und der Ausrichtung 120 relativ groß, das Abtastfeld 115 ist in Richtung eines Untergrunds oder Bodens des Kraftfahrzeugs 100 geschwenkt. Fig. 3B zeigt eine Stellung der Abtasteinrichtung 105, bei der der gleiche Winkel kleiner ist: das Abtastfeld 115 ist in Richtung eines Horizonts geschwenkt. In der Stellung von Fig. 3A kann mittels der Lidar-Abtasteinrichtung 105 verbessert ein Nachbereich des Kraftfahrzeugs 100 abgetastet werden, während mittels der in Fig. 3B gezeigten Stellung verbessert ein Fernbereich abgetastet werden kann. Es ist bevorzugt, den großen Winkel von Fig. 3A bei einer niedrigen Geschwindigkeit und den kleinen Winkel von Fig. 3B bei einer hohen Geschwindigkeit des Kraftfahrzeugs 100 einzustellen. Ein Übergang zwischen den Winkeln kann kontinuierlich oder sprunghaft gestaltet werden.

In beiden Figuren 3A und 3B ist der Lidar-Sensor 110 im vorderen Bereich des Kraftfahrzeugs, etwa auf Höhe eines Stoßfängers 305 des Kraftfahrzeugs 100 angebracht. In anderen Ausführungsformen können auch, wie in Fig. 3B angedeutet ist, Positionen im Bereich eines Dachs 310, eines seitlichen Bereichs 315, eines Seitenspiegelgehäuses 320 oder eines Kühlergrills 325 für den Lidar-Sensor 110 verwendet werden. Bevorzugterweise ist der Lidar-Sensor 110 derart am Kraftfahrzeug 100 angebracht, dass er eine Linienführung des Kraftfahrzeugs 100 möglichst nicht stört und idealerweise kaum oder gar nicht sichtbar ist. Beispielsweise kann der Lidar-Sensor 110 am seitlichen Bereich 315 an oder in einer Zierleiste, am Kühlergrill 325 an oder in einem Markenlogo oder am Dach 310 an oder in einem Antennengehäuse für eine GPS- oder Rundfunkantenne angeordnet werden. Besonders bevorzugt ist die Anbringung des Lidar-Sensors 110 im Seitenspiegelgehäuse 320.

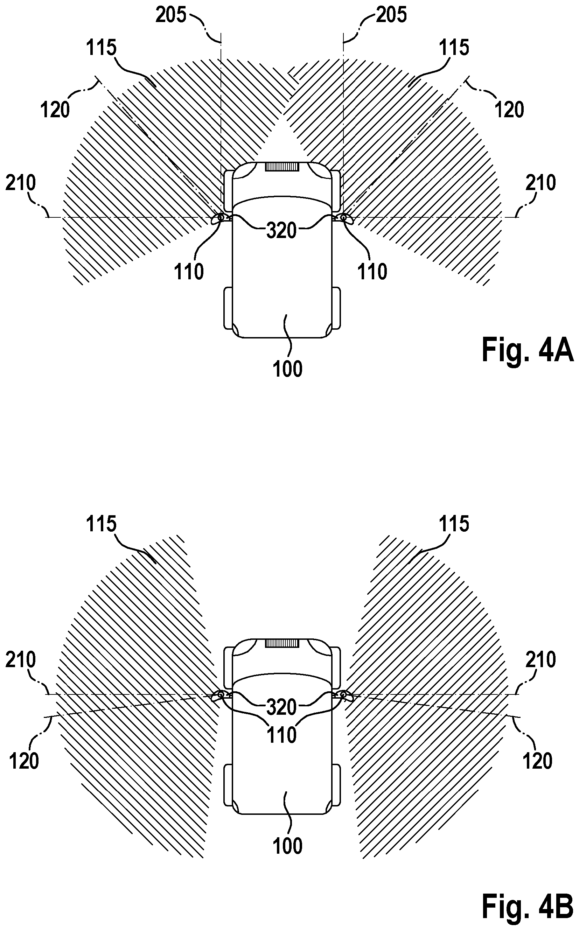

Fig. 4 zeigt unterschiedlich horizontal geschwenkte Lidar-Sensoren 110 am Kraftfahrzeug 100. Rein exemplarisch sind zwei Lidar-Sensoren 110 vorgesehen, die zur gleichen oder zu zwei verschiedenen Lidar-Abtasteinrichtungen 105 gehören können. Jeder Lidar-Sensor 110 ist in einem Außenspiegelgehäuse 320 des Kraftfahrzeugs 100 angebracht. Fig. 4A zeigt Ausrichtungen der Lidar-Sensoren 110, bei denen die Ausrichtungen 120 in Fahrtrichtung des Kraftfahrzeugs 100 verlaufen und relativ große Winkel zur Querachse 210 des Kraftfahrzeugs 100 einschließen. Vor dem Kraftfahrzeug 100 überlappen sich die Abtastfelder 115 der beiden Lidar-Sensoren 110. In Fig. 4B ist eine andere Stellung der Lidar-Sensoren 110 dargestellt, bei der Ausrichtungen 120 exemplarisch leicht gegen die Fahrtrichtung des Kraftfahrzeugs 100 weisen und einen relativ kleinen Winkel zur Querachse 210 einschließen. Dabei überlappen sich die Abtastfelder 115 nicht.

Die in Fig. 4A dargestellte Stellung kann bevorzugt für eine Vorwärtsfahrt, beispielsweise bei höherer Geschwindigkeit, verwendet werden, während die in Fig. 4B gezeigte Stellung beispielsweise verbessert während einer langsamen Fahrt, einer Parkplatzsuche, eines Einparkvorgangs oder eines Stillstands eingenommen wird.

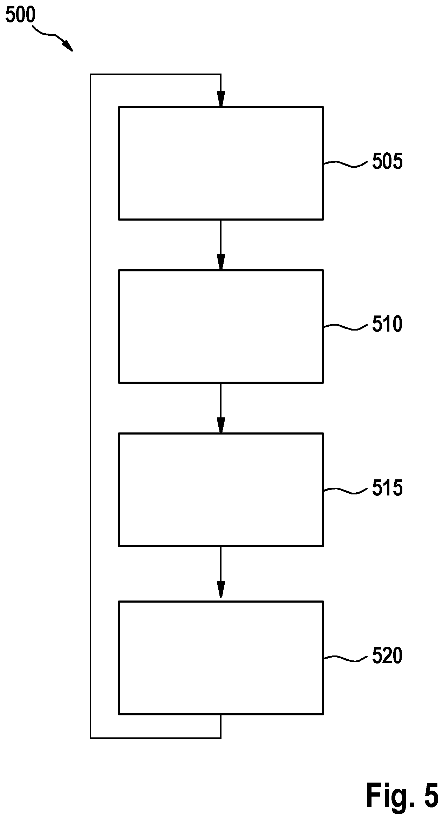

Fig. 5 zeigt ein Ablaufdiagramm eines Verfahrens 500. Das Verfahren 500 ist insbesondere zur Ausführung in der Verarbeitungseinrichtung 130 eingerichtet. Dazu kann das Verfahren 500 ein Computerprogrammprodukt und die Verarbeitungseinrichtung 130 einen programmierbaren Mikrocomputer umfassen.

In einem ersten Schritt 505 wird eine Fahrsituation des Kraftfahrzeugs 100 bestimmt. Die Fahrsituation kann beispielsweise auf der Basis von Abtastergebnissen im Umfeld des Kraftfahrzeugs 100 und/oder auf der Basis von Stellungen bestimmter Aktuatoren bestimmt werden. Die Aktuatoren können insbesondere eine Längs- oder Quersteuerung des Kraftfahrzeugs 100 betreffen. Außerdem können eine Geschwindigkeit, eine Beschleunigung oder eine Drehung des Kraftfahrzeugs 100 entlang bzw. um die Achsen 205, 210 oder 215 zur Bestimmung der Fahrsituation herangezogen werden.

In einem Schritt 510 wird auf der Basis der bestimmten Fahrsituation die Ausrichtung 120 des Lidar-Sensors 110 verändert. Wie oben bereits beschrieben wurde, kann hierfür ein optisches System, der Lidar-Sensor 110 oder die komplette Lidar-Abtasteinrichtung 105 bewegt werden. Die Bewegung erfolgt bevorzugterweise um eine Achse oder weiter bevorzugt um zwei Achsen, die voneinander linear unabhängig sind.

In einem Schritt 515 wird ein Umfeld des Kraftfahrzeugs 100 mittels der Lidar-Abtasteinrichtung 105 abgetastet.

In einem Schritt 520 kann ein Abtastergebnis dargestellt bzw. bereitgestellt werden oder das Kraftfahrzeug 100 kann auf der Basis des Abtastergebnisses gesteuert werden. Anschließend kann das Verfahren 500 zum ersten Schritt 505 zurückkehren und erneut durchlaufen. Es ist zu beachten, dass die Fahrsituation im Schritt 505 auch auf der Basis der Abtastergebnisse des Schritts 520 bestimmt werden kann.

## Patentansprüche

1. Lidar-Abtasteinrichtung (110) zum Einsatz in einem Kraftfahrzeug (100), wobei die Lidar-Abtasteinrichtung (110) folgendes umfasst:
- einen Lidar-Sensor (110) mit einem vorbestimmten Abtastfeld (115);
- wobei der Lidar-Sensor (110) zur Abstandsbestimmung eines Objekts (145) innerhalb des Abtastfelds (115) eingerichtet ist;
- eine Schwenkeinrichtung (125) zur Veränderung einer Ausrichtung (120) des Abtastfelds (115) des Lidar-Sensors (110) in Abhängigkeit von einer Fahrsituation des Kraftfahrzeugs (100),
- wobei das Abtastfeld (115) um eine Querachse (210) des Kraftfahrzeugs (100) verändert wird und das Abtastfeld (115) bei einer niedrigen Fahrgeschwindigkeit in Richtung Boden und bei einer hohen Fahrgeschwindigkeit in Richtung Horizont verändert wird,
- wobei die Ausrichtung (120) des Lidar-Sensors (110) in Fahrtrichtung des Kraftfahrzeugs (100) verläuft.

2. Lidar-Abtasteinrichtung (110) nach Anspruch 1, wobei die Schwenkeinrichtung (125) dazu eingerichtet ist, den Lidar-Sensor (110) um eine Achse zu schwenken.

3. Lidar-Abtasteinrichtung (110) nach Anspruch 1 oder 2, wobei die Schwenkeinrichtung (125) dazu eingerichtet ist, ein reflektorisches oder refraktorisches Element im Strahlengang des Lidar-Sensors (110) um eine Achse zu schwenken.

4. Lidar-Abtasteinrichtung (110) nach einem der vorangehenden Ansprüche, wobei die Ausrichtung (120) des Abtastfelds (115) um eine Hochachse (215) verändert wird.

5. Lidar-Abtasteinrichtung (110) nach einem der vorangehenden Ansprüche, wobei die Lidar-Abtasteinrichtung (110) an einem Seitenspiegelgehäuse (320) des Kraftfahrzeugs (100) angebracht ist.

6. Verfahren (500), folgende Schritte umfassend:
- Bestimmen (505) einer Fahrsituation eines Kraftfahrzeugs (100);
- Verändern (510) einer Ausrichtung (120) eines Abtastfelds (115) eines Lidar-Sensors (110) einer Lidar-Abtasteinrichtung (110), die am Kraftfahrzeug (100) angebracht ist, auf der Basis der bestimmten Fahrsituation;
- Abtasten (515) eines Umfelds des Kraftfahrzeugs (100) mittels der Lidar-Abtasteinrichtung (110); und
- Bestimmen (515) eines Abstands zu einem Objekt (145) innerhalb des Abtastfelds (115),
wobei das Abtastfeld (115) um eine Querachse (210) des Kraftfahrzeugs (100) verändert wird und das Abtastfeld (115) bei einer niedrigen Fahrgeschwindigkeit in Richtung Boden und bei einer hohen Fahrgeschwindigkeit in Richtung Horizont verändert wird,
wobei die Ausrichtung (120) des Lidar-Sensors (110) in Fahrtrichtung des Kraftfahrzeugs (100) ausgerichtet wird.

7. Verfahren (500) nach Anspruch 6, wobei das Kraftfahrzeug (100) in Abhängigkeit des bestimmten Abstands gesteuert (520) wird.

## Claims

1. Lidar scanning device (110) for use in a motor vehicle (100), wherein the lidar scanning device (110) comprises the following:
- a lidar sensor (110) with a predetermined scanning field (115);
- wherein the lidar sensor (110) is configured for determining the distance of an object (145) within the scanning field (115);
- a pivoting device (125) for changing an orientation (120) of the scanning field (115) of the lidar sensor (110) depending on a driving situation of the motor vehicle (100),
- wherein the scanning field (115) is changed about a transverse axis (210) of the motor vehicle (100) and the scanning field (115) is changed in the direction of the ground at a low driving speed and in the direction of the horizon at a high driving speed,
- wherein the orientation (120) of the lidar sensor (110) extends in the direction of travel of the motor vehicle (100) .

2. Lidar scanning device (110) according to Claim 1, wherein the pivoting device (125) is configured to pivot the lidar sensor (110) about an axis.

3. Lidar scanning device (110) according to Claim 1 or 2, wherein the pivoting device (125) is configured to pivot a reflective or refractive element in the beam path of the lidar sensor (110) about an axis.

4. Lidar scanning device (110) according to any of the preceding claims, wherein the orientation (120) of the scanning field (115) is changed about a vertical axis (215) .

5. Lidar scanning device (110) according to any of the preceding claims, wherein the lidar scanning device (110) is mounted on a side mirror housing (320) of the motor vehicle (100).

6. Method (500), comprising the following steps:
- determining (505) a driving situation of a motor vehicle (100);
- changing (510) an orientation (120) of a scanning field (115) of a lidar sensor (110) of a lidar scanning device (110), which is mounted on the motor vehicle (100), on the basis of the determined driving situation;
- scanning (515) an environment of the motor vehicle (100) by means of the lidar scanning device (110); and
- determining (515) a distance to an object (145) within the scanning field (115),
wherein the scanning field (115) is changed about a transverse axis (210) of the motor vehicle (100) and the scanning field (115) is changed in the direction of the ground at a low driving speed and in the direction of the horizon at a high driving speed, wherein the orientation (120) of the lidar sensor (110) extends in the direction of travel of the motor vehicle (100).

7. Method (500) according to Claim 6, wherein the motor vehicle (100) is controlled (520) depending on the determined distance.

## Revendications

1. Dispositif de balayage lidar (110) destiné à être utilisé dans un véhicule automobile (100), le dispositif de balayage lidar (110) comprenant :
- un capteur lidar (110) présentant un champ de balayage prédéterminé (115) ;
- le capteur lidar (110) étant conçu pour déterminer la distance d'un objet (145) à l'intérieur du champ de balayage (115) ;
- un dispositif de pivotement (125) pour modifier une orientation (120) du champ de balayage (115) du capteur lidar (110) en fonction d'une situation de conduite du véhicule automobile (100),
- le champ de balayage (115) étant modifié autour d'un axe transversal (210) du véhicule automobile (100) et le champ de balayage (115) étant modifié en direction du sol lorsque la vitesse de déplacement est faible et en direction de l'horizon lorsque la vitesse de déplacement est élevée,
- l'orientation (120) du capteur lidar (110) s'étendant dans la direction de déplacement du véhicule automobile (100) .

2. Dispositif de balayage lidar (110) selon la revendication 1, dans lequel le dispositif de pivotement (125) est conçu pour faire pivoter le capteur lidar (110) autour d'un axe.

3. Dispositif de balayage lidar (110) selon la revendication 1 ou 2, dans lequel le dispositif de pivotement (125) est conçu pour faire pivoter autour d'un axe un élément réflecteur ou réfracteur dans le trajet de faisceau du capteur lidar (110).

4. Dispositif de balayage lidar (110) selon l'une quelconque des revendications précédentes, dans lequel l'orientation (120) du champ de balayage (115) est modifiée autour d'un axe vertical (215).

5. Dispositif de balayage lidar (110) selon l'une quelconque des revendications précédentes, dans lequel le dispositif de balayage lidar (110) est monté sur un boîtier de rétroviseur latéral (320) du véhicule automobile (100).

6. Procédé (500) comprenant les étapes suivantes :
- détermination (505) d'une situation de conduite d'un véhicule automobile (100) ;
- modification (510) d'une orientation (120) d'un champ de balayage (115) d'un capteur lidar (110) d'un dispositif de balayage lidar (110) monté sur le véhicule automobile (100), sur la base de la situation de conduite déterminée ;
- balayage (515) d'un environnement du véhicule automobile (100) au moyen du dispositif de balayage lidar (110) ; et
- détermination (515) d'une distance par rapport à un objet (145) à l'intérieur du champ de balayage (115),
le champ de balayage (115) étant modifié autour d'un axe transversal (210) du véhicule automobile (100) et le champ de balayage (115) étant modifié en direction du sol lorsque la vitesse de déplacement est faible et en direction de l'horizon lorsque la vitesse de déplacement est élevée, l'orientation (120) du capteur lidar (110) s'étendant dans la direction de déplacement du véhicule automobile (100).

7. Procédé (500) selon la revendication 6, dans lequel le véhicule automobile (100) est commandé (520) en fonction de la distance déterminée.
